# EUROPEAN PATENT APPLICATION

(11) **EP 4 438 771 A2**
(43) Date of publication of application: **02.10.2024**
(21) Application number: 24163159.7
(22) Date of filing: 13.03.2024
(51) Int. Cl.: C25B 1/04, C25B 9/19, C25B 9/60

(54) **POLYMER ELECTROLYTE WATER ELECTROLYZER GRAPHENE OXIDE FLAKE BLOCKING MATERIAL**

(30) Priority: 30.03.2023 US 202318128878
(71) Applicant: Robert Bosch GmbH, 70442 Stuttgart (DE)
(72) Inventor: Stuehmeier, Bjoern, Santa Clara, CA, 95054 (US); Craig, Nathan P., Sunnyvale, CA, 94087 (US); Mehrazi, Shirin, Sunnyvale, CA, 94085 (US); Braaten, Jonathan, Sunnyvale, CA, 94086 (US); Cheng, Lei, San Jose, California, 95131 (US); Johnston, Christina, San Jose, California, 95124-3824 (US); Kitchaev, Daniil, Somerville, Massachusetts, 02144 (US); Kornbluth, Mordechai, Brighton, Massachusetts, 02135 (US)

(57) **Abstract**

A polymer electrolyte water electrolyzer (PEWE). The PEWE includes a cathode catalyst layer, an anode catalyst layer, and a polymer electrolyte membrane between and separating the anode catalyst layer and the cathode catalyst layer. The PEWE further includes a blocking layer disposed between the cathode catalyst layer and configured to resist unwanted diffusion of ions or molecules through the polymer electrolyte water electrolyzer.

## Description

### TECHNICAL FIELD

This invention in one or more embodiments relates to a polymer electrolyte water electrolyzer graphene oxide flake blocking material configured to mitigate crossover within the polymer electrolyte water electrolyzer. The blocking material may be a blocking layer.

### BACKGROUND

A polymer electrolyte water electrolyzer includes an anode compartment and a cathode compartment with a polymer electrolyte membrane as a separator therebetween. The anode compartment contains an anode catalyst material configured to facilitate the oxidation of water into hydrogen atoms. The cathode compartment contains a cathode catalyst material configured to facilitate the evolution of hydrogen gas. Hydrogen ions pass through the polymer electrolyte membrane from the anode compartment to the cathode compartment when a voltage is applied between the electrodes. At the cathode compartment, the hydrogen ions react with electrons to form hydrogen gas. At the anode compartment, oxygen ions are formed and combine to form oxygen gas.

There are many considerations relating to the safety and efficiency of operation of a polymer electrolyte water electrolyzer. One such consideration is the mitigation of crossover. Crossover is an undesired transport of reactants or products from one electrode to the other across the polymer electrolyte membrane. Crossover may be caused by one or more factors (e.g., the chemical properties of the species crossing over, the properties of the polymer electrolyte membrane, etc.). Mitigating crossover to increase efficiency and safety in the operation of polymer electrolyte water electrolyzers has been an area of research but crossover mitigation has not been adequately addressed.

### SUMMARY

Embodiments of this invention relate to the use of blocking materials (e.g., blocking layers) in polymer electrolyte water electrolyzers (PEWEs). The PEWE may include cathode side blocking material material/layer including graphene oxide (GO) flakes. The blocking material may encapsulate (e.g., fully encapsulate) the cathode catalyst layer. The blocking material may fully encapsulate the cathode catalyst layer and/or the anode catalyst layer. The blocking material may individually encapsulate at least a portion of the cathode catalyst particles. The blocking layer includes graphene oxide (GO) flakes and an ionomer binder.

In one or more embodiments, a method of forming a blocking material layer in a polymer electrolyte water electrolyzer is disclosed. The method may include applying a blocking material mixture onto a cathode catalyst layer. The method further includes applying a polymer electrolyte membrane onto the blocking material mixture to form a blocking material layer. The blocking material layer is configured to resist unwanted diffusion of ions or molecules through the polymer electrolyte water electrolyzer. The blocking material mixture includes graphene oxide (GO) flakes and an ionomer binder.

### BRIEF DESCRIPTION OF THE DRAWINGS

Figure 1 depicts a schematic cross section view of a polymer electrolyte water electrolyzer (PEWE) according to one embodiment.
Figure 2 depicts a schematic cross section view of a membrane electrode assembly (MEA) of a PEWE where the MEA does not include one or more blocking layers.
Figure 3 depicts a schematic cross section view of an MEA including first and second blocking layers configured to mitigate crossover.
Figure 4 is a graph plotting hydrogen crossover current density (mA/cm²) as a function of voltage (V) according to a first embodiment.
Figure 5 depicts a plain view scanning electron microscope (SEM) image showing graphene oxide stacks and single layer graphene on a Nafion layer in connection with one or more embodiments.
Figure 6A depicts a schematic cross section view of an MEA including a graphene oxide (GO) flake blocking layers configured to mitigate crossover.
Figure 6B depicts an exploded, schematic view of the graphene oxide (GO) flake blocking layer shown in Figure 6A.
Figure 7 is a graph plotting hydrogen crossover density (mA/cm²) as a function of voltage (V) according to a second embodiment.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the term "polymer" includes "oligomer," "ionomer," "copolymer," "terpolymer," and the like; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. These terms may be used to modify any numeric value disclosed or claimed herein. Generally, the term "about" denoting a certain value is intended to denote a range within ± 5% of the value. As one example, the phrase "about 100" denotes a range of 100 ± 5, i.e., the range from 95 to 105. Generally, when the term "about" is used, it can be expected that similar results or effects according to the invention can be obtained within a range of ± 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1 to 10 explicitly includes 1, 2, 3, 4, 5, 6, 7, 8, 9, and 10. Similarly, the range 1 to 100 includes 1, 2, 3, 4, .... 97, 98, 99, 100. Similarly, when any range is called for, intervening numbers that are increments of the difference between the upper limit and the lower limit divided by 10 can be taken as alternative upper or lower limits. For example, if the range is 1.1 to 2.1 the following numbers 1.2, 1.3, 1.4, 1.5, 1.6, 1.7, 1.8, 1.9, and 2.0 can be selected as lower or upper limits.

In the examples set forth herein, concentrations, temperature, and reaction conditions (e.g., pressure, pH, flow rates, etc.) can be practiced with plus or minus 50 percent of the values indicated rounded to or truncated to two significant figures of the value provided in the examples. In a refinement, concentrations, temperature, and reaction conditions (e.g., pressure, pH, flow rates, etc.) can be practiced with plus or minus 30 percent of the values indicated rounded to or truncated to two significant figures of the value provided in the examples. In another refinement, concentrations, temperature, and reaction conditions (e.g., pressure, pH, flow rates, etc.) can be practiced with plus or minus 10 percent of the values indicated rounded to or truncated to two significant figures of the value provided in the examples.

As used herein, the term "and/or" means that either all or only one of the elements of said group may be present. For example, "A and/or B" means "only A, or only B, or both A and B". In the case of "only A", the term also covers the possibility that B is absent, i.e., "only A, but not B".

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

The term "comprising" is synonymous with "including," "having," "containing," or "characterized by." These terms are inclusive and open-ended and do not exclude additional, unrecited elements or method steps.

The phrase "consisting of excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of" limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed and claimed subject matter can include the use of either of the other two terms.

The term "one or more" means "at least one" and the term "at least one" means "one or more." The terms "one or more" and "at least one" include "plurality" as a subset.

The description of a group or class of materials as suitable for a given purpose in connection with one or more embodiments implies that mixtures of any two or more of the members of the group or class are suitable. Description of constituents in chemical terms refers to the constituents at the time of addition to any combination specified in the description and does not necessarily preclude chemical interactions among constituents of the mixture once mixed. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

Polymer electrolyte water electrolyzers (PEWEs) have shown promise for producing green hydrogen. A challenge associated with the mass adoption of PEWEs is the movement of unintended chemical species (e.g., gas, ions, and radicals) through the polymer electrolyte membrane (otherwise referred to as the PEM) of a PEWE. Gas species (e.g., hydrogen and oxygen gas) formed from the water electrolysis may move across the polymer electrolyte membrane of a PEWE. For example, hydrogen gas generated on the cathode compartment may crossover to the anode compartment and mix with oxygen gas at an unacceptable level. High pressure differentials used in PEWEs may also contribute to problems associated with crossover.

Additionally, the presence of other chemical species may cause degradation of the polymer electrolyte membrane over time. Formation of hydrogen peroxide due to oxygen crossover from the anode to the cathode compartment may cause degradation to the ionomer and the polymer electrolyte membrane. Polymer electrolyte membrane degradation may also be caused by radical attack via Fenton mechanisms involving metal ion impurities originating from bipolar plate corrosion.

There are existing strategies for membrane degradation mitigation involving the modification of the polymer electrolyte membrane. One proposed strategy is the use of relatively thicker membranes for the polymer electrolyte. While the use of relatively thicker membranes may reduce degradation, the thicker membrane may reduce efficiency of the PEWE due to the increased ionic resistance of the membrane. Excessive hydrogen concentration at the oxygen side of the PEWE may be mitigated by catalytic recombination, where crossover hydrogen forms water inside the cell at the recombination layer near the membrane. However, this proposed solution is less cost-effective. Other approaches have been proposed that involve using materials in the polymer electrolyte membrane that are resistant to gas crossover. However, the current proposals have trade offs that compromise the overall operation and efficiency of a PEWE.

Considering the foregoing, what is needed is a PEWE and cells thereof that satisfactorily address (e.g., prevents or at least resists) species crossover while providing a construction that is compatible with existing large-scale manufacturing of membrane electrode assemblies (MEAs) of the PEWE. One or more embodiments disclose an electrode blocking layer to mitigate species crossover and/or to provide compatibility with existing MEA constructions.

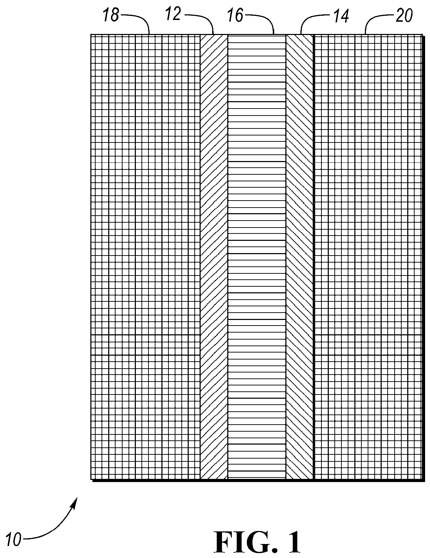

Figure 1 depicts a schematic cross section view of polymer electrolyte water electrolyzer (PEWE) 10 according to one embodiment. PEWE 10 includes anode catalyst layer 12 and cathode catalyst layer 14 separated by polymer electrolyte membrane 16. A catalyst material is included in anode catalyst layer 12 and cathode catalyst layer 14. Non-limiting examples of catalyst materials suitable for use with one or more embodiments includes platinum (Pt), palladium (Pd), iridium (Ir), platinum alloys, palladium alloys, iridium alloys, and non-noble catalysts such as doped carbons.

Porous transport layer 18 contacts the surface of anode catalyst layer 12 opposing polymer electrolyte membrane 16. Gas diffusion media 20 contacts the surface of cathode catalyst layer 14 opposing polymer electrolyte membrane 16. Oxygen evolution (OER) occurs at anode catalyst layer 12 and hydrogen evolution (HER) occurs at cathode catalyst layer 14 with H⁺ ions flowing across polymer electrolyte membrane 16 from anode catalyst layer 12 to cathode catalyst layer 14. As set forth herein in one or more embodiments, electrode blocking layers may be applied to PEWE 10 to provide species crossover mitigation and/or compatibility with existing MEA constructions.

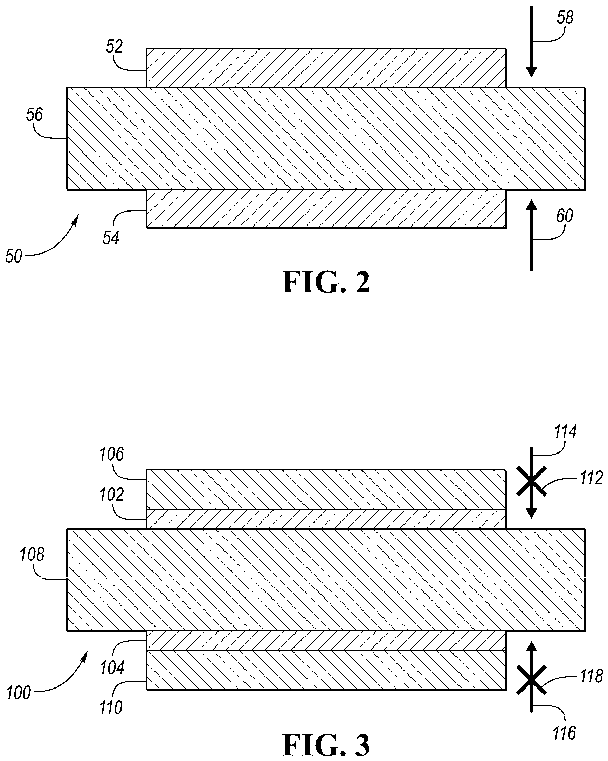

Figure 2 depicts a schematic cross section view of membrane electrode assembly (MEA) 50 of a PEWE where MEA 50 does not include one or more blocking layers. MEA 50 includes cathode catalyst layer 52, anode catalyst layer 54, and polymer electrolyte membrane 56 functioning as a separator between cathode catalyst layer 52 and anode catalyst layer 54. The following reaction occurs at cathode catalyst layer 52: 2H⁺ + 2e⁻ → H₂. The following reaction occurs at anode catalyst layer 54: H₂O → 2e⁻ + 2H⁺ + ½O₂. Arrow 58 represents H₂ crossover that may occur at cathode catalyst layer 52 into polymer electrolyte membrane 56. Arrow 60 represents O₂ crossover and/or metal ion (e.g., Fe²⁺) diffusion that may occur at anode catalyst layer 54 into polymer electrolyte membrane 56. One or more embodiments reduces one or more of these types of crossover.

Figure 3 depicts a schematic cross section view of MEA 100 including first and second blocking layers 102 and 104 configured to mitigate crossover. Blocking layer 102 is disposed between cathode catalyst layer 106 and polymer electrolyte membrane 108. Blocking layer 104 is disposed between anode catalyst layer 110 and polymer electrolyte membrane 108. Cross 112 on arrow 114 represents mitigation of H₂ crossover at cathode catalyst layer 106 into polymer electrolyte layer 108. Cross 118 on arrow 116 represents mitigation of O₂ crossover and/or metal ion diffusion (e.g., Fe²⁺) at anode catalyst layer 110 into polymer electrolyte membrane 108. In one or more embodiments, blocking layers 102 and 104 are configured to mitigate (e.g., prevent) hydrogen and oxygen crossover, respectively. In one or more embodiments, blocking layer 104 is configured to mitigate (e.g., prevent) metal ions (e.g., Fe²⁺) from diffusing and migrating to polymer electrolyte membrane 108, thereby reducing chemical degradation of polymer electrolyte membrane 108.

First and/or second blocking layers 102 and 104 may contain one or more layers (e.g., a monolayer or a multilayer formation) of a layered material. The number of multilayers may be any of the following values or in a range of any two of the following values: 1, 2, 3, 4, 5, 6, 7, 8, 9, and 10.

First blocking layer 102 may contain one or more first layers of one or more first materials. Second blocking layer 104 may contain one or more second layers of one or more second materials. In one or more embodiments, the one or more first materials are the same as the one or more second materials. Alternatively, the one or more first materials are different than the one or more second materials. In one or more embodiments, the first number of the one or more first layers is the same as a second number of the one or more second layers. The first number of the one or more first layers may be less than the second number of the one or more second layers. Alternatively, the first number of the one or more first layers may be greater than the second number of the one or more second layers.

The layered material may be an inorganic layered material. Non-limiting examples of the layered material include graphene oxide (GO), functionalized graphene oxide material, graphene, two-dimensional (2D) transition metal carbides or carbonitrides (MXenes), hexagonal boron nitride (Hbn), a layered mica material, other 2D materials, and combinations thereof. The MXene material may be derived from a MAX phase material. The MAX phase material may be a layered ternary carbide or carbonitride having a transition metal, an A group element, and carbon or nitrogen. The A group element may etch away to form the 2D transition metal carbide or carbonitride. The mica material may be present in 1, 2, 3, 4, or 5 layers.

Non-limiting examples of other 2D materials that may be used as layered materials in blocking layers include transition metal dichalcogenides (TMDs) (e.g., MoS₂), layered double hydroxides (LDHs) (e.g., NiAl-CO₃), metal-organic frameworks (MOFs), transition metal carbides or nitrides (e.g., MXenes), and combinations thereof.

The layered material used as a blocking layer may have pores and/or vacancies to permit ion transport without transport of undesired species (e.g., crossover contaminants). The pores and/or vacancies may have any of the following average sizes or be in a range of any two of the following average sizes: 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, and 30 nm in diameter.

In one or more embodiments, the layered material for use as a blocking layer may be any material that conducts H⁺ and/or OH⁻ ions but blocks H₂ gas, O₂ gas, OH* radicals, OOH* radicals, other radicals, H₂O molecules, polyatomic molecules, metal complexes (e.g. Fe(H₂O)₄(OH)₂) and/or metal ions (e.g., Fe²⁺).

In one or more embodiments, the same blocking layer comprised of the same layered material(s) and/or same number of layers is incorporated on the anode compartment and cathode compartment sides of the MEA of the PEWE. In another embodiment, the blocking layers are comprised of a first blocking layer material on the anode compartment side and a second blocking layer material on the cathode compartment side where the first and second blocking layer materials are different (e.g., different materials and/or different number of layers). In yet other embodiments, only one of the anode compartment and cathode compartment sides include a blocking material.

The application of one or more of the embodiments disclosed above may be based on one or more of the following considerations. The cathode catalyst layer has protons (H⁺) and typically has a hydrated ionomer configured to enable mass transport of the protons. In one or more embodiments, it is desired to include a blocking layer in the anode compartment to limit oxygen gas crossover into the cathode catalyst layer. The polymer electrolyte membrane typically has H₂O to enable proton conduction. In one or more embodiments, it is desired to limit metal ion and OH* (peroxide radical) content in the polymer electrolyte membrane, to prevent membrane chemical degradation and/or pinhole formation. The metal ions are typically generated in the interface of the bipolar plate and the catalyst layer interface. The anode catalyst layer has oxygen gas, and a byproduct of the reaction at this layer may be an amount of OH*. Accordingly, in one or more embodiments, it is desirable to include a blocking layer in the anode compartment to limit metal ion diffusion and transport to the polymer electrolyte membrane and to limit OH* in the polymer electrolyte membrane.

In one or more embodiments, the blocking layer completely covers the interface between the catalyst layer (e.g., cathode catalyst layer and/or anode catalyst layer) and the polymer electrolyte membrane. Alternatively, the blocking layer covers less than 100% (e.g., 60%, 65%, 70%, 75%, 80%, 85%, 90%, 95%, 96%, 97%, 98%, 99%, or any range of two of the percentages) of the interface between the catalyst layer (e.g., cathode catalyst layer and/or anode catalyst layer) and the polymer electrolyte membrane.

The blocking layer may be a discrete layer from a catalyst layer (e.g., cathode catalyst layer and/or anode catalyst layer) and the membrane layer. The thickness of the blocking layer may be any of the following values or in a range of two of the following values: 20 nm, 40 nm, 60 nm, 80 nm, 100 nm, 200 nm, 300 nm, 400 nm, 500 nm, 600 nm, 700 nm, 800 nm, 900 nm, 1 µm, 1.5 µm, 2 µm, 3 µm, 4 µm, and 5 µm. Alternatively, the blocking layer may be mixed with a catalyst layer (e.g., cathode catalyst layer and/or anode catalyst layer) and/or the membrane layer.

In one or more embodiments, a blocking material individually encapsulates (e.g., partially or completely) a percentage of individual particles (e.g., nanoparticles) within the catalyst layer and/or the catalyst support supporting the catalyst layer. Non-limiting examples of catalyst support materials include carbon black, metal oxides, and combinations thereof. The percentage of encapsulated particles may be any of the following values or in a range of any two of the following values: 25, 30, 35, 40, 45, 50, 55, 60, 65, 70, 75, 80, 85, 90, 95, and 100%. Alternatively, the blocking material may encapsulate the entire outside surface of the catalyst layer, which may include the catalyst support.

One or more methods may be used to apply a blocking material between a catalyst layer (e.g., cathode catalyst layer and/or anode catalyst layer) and a polymer electrolyte membrane. Also, the blocking material may be incorporated into a catalyst layer. The blocking material, a catalyst material, an ionomer, and/or a binder may be coated (e.g., spray coated as an ink) onto a substrate (e.g., a catalyst support or a catalyst layer). The ionomer and/or binder may be incorporated as part of the blocking/catalyst layer. Non-limiting examples of ionomer materials include an Aquivion ionomer, a Nafion ionomer, a Nafion-based material, a polyfluoropolymer such as polytetrafluoroethylene (PTFE), a low equivalent weight ionomer, a high oxygen permeable ionomer (HOPI), and combinations thereof. The blocking layer may also include a radical scavenger configured to mitigate peroxide or metal-ion attack (e.g., ceria nanoparticles).

The application process may be performed by mixing materials and then applying the mixed materials onto a substrate. The application process may use spray coating. Alternatively, application may be accomplished through wet film coating in a roll-to-roll application. For instance, a catalyst layer may include a blocking material and a catalyst material. The catalyst material may further include an ionomer material, a binder material, and/or a scavenging agent. The selected materials may be mixed, and the mixture applied onto a catalyst support. As another example, a blocking layer may include a blocking material and an ionomer, a binder, and/or a scavenging agent. The selected materials may be mixed, and the mixture applied onto a substrate (e.g., catalyst surface layer). In another embodiment, the selected materials may be applied onto a substrate (e.g., a catalyst support or a catalyst surface layer) sequentially. For instance, a mixture of blocking material and a binder material may be applied onto a catalyst support followed by a mixture of a catalyst material and an ionomer material applied onto the sprayed mixture of the blocking material and the binder material. This sequence may be repeated to deposit more than two layers. In one embodiment, the blocking layer may be a single layer or repeating layers of a mixture of an ionomer and a blocking material (e.g., graphene oxide, hexagonal boron nitride, or mica), where the blocking material for each of the repeating layers is individually selected. The ratio of the blocking material to the ionomer material may be 10 to 0.5.

In other embodiments, the blocking material (e.g., a 2D material) may be applied onto the catalyst nanoparticles directly via ALD, solution deposition, or electrochemical deposition.

Following is an experimental setup for fabricating a blocking layer in accordance with one or more embodiments. A sample was prepared by dispersing Pt/C (40% Pt/C cathode and 30% Pt/C anode) and Nafion dispersion (D2020, available from Ion Power Inc.) in a water-isopropyl alcohol (IPA) solvent (water to IPA equals 1), using a planetary ball milling mixer (e.g., a Thinky mixer available from Thinky U.S.A, Inc.). Pt loading of the resulting catalyst layer was 0.3 and 0.2 mg_{Pt}/cm² in the cathode and the anode, respectively. The ionomer to carbon ratio was set at 0.85 in both the anode and the cathode inks. The catalyst ink was coated on a virgin PTFE using Mayer rod and transferred to a Nafion XL membrane (available from Ion Power Inc.) via decal transfer method at 135°C and 300 Psi.

A sample with a graphene-oxide blocking layer was prepared by overcoating the baseline cathode catalyst decal with a water-based graphene oxide (GO)-Nafion dispersion (GO to ionomer equals 1.1). The cathode catalyst double layer was then transferred to the membrane under same condition as the sample identified above. The overall thickness of the double layer was 10 µm (e.g., 8 µm catalyst layer and a 2 µm graphene oxide layer). An MEA with a 4 cm² active area was assembled with an AVCarb gas diffusion media (available from AvCarb Material Solutions) for hydrogen crossover measurements. Linear sweep voltammetry was measured with H₂ (0.2 NL/min) flowing on the anode side and N₂ (0.8 NL/min) on the cathode side under 100% RH, atmospheric pressure, and at 80°C.

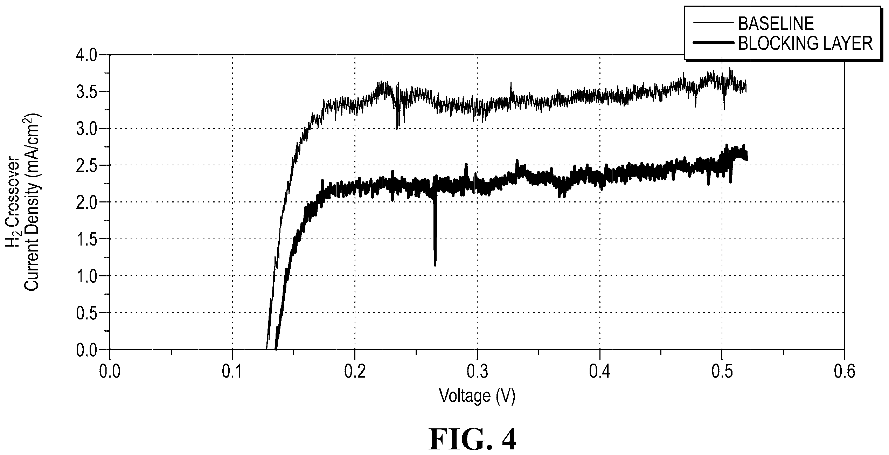

Following are the experimental results using the two samples prepared above. The fabrication of a graphene oxide-enhanced membrane electrode assembly, where the graphene oxide layer was deposited between a Nafion XL membrane and the cathode catalyst layer of an MEA in a hydrogen crossover measurement, resulted in a lower measured crossover current density as shown in Figure 4. This reduced crossover is indicative of a hindered H₂ flux from the anode of the MEA to the cathode of the MEA, where pure N₂ exists in the measurement.

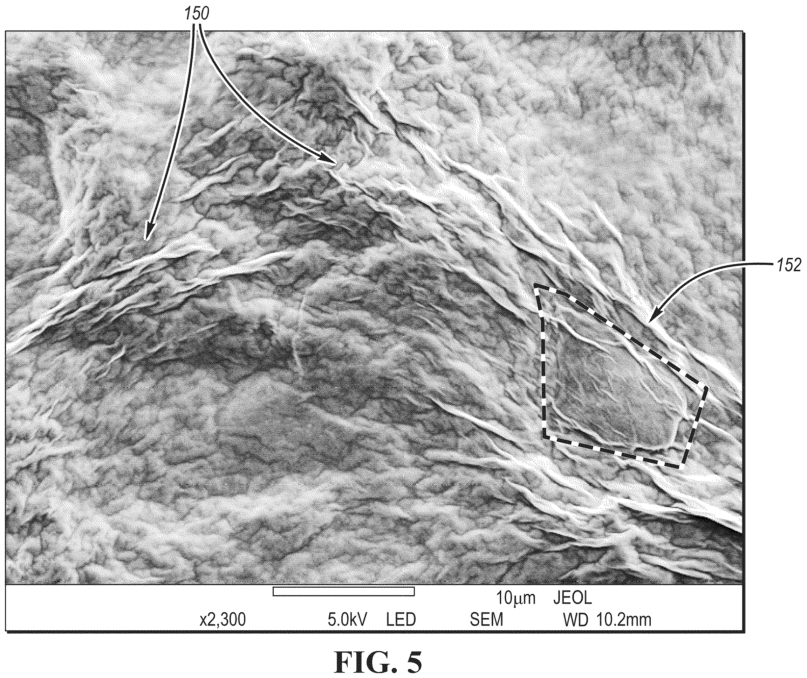

Figure 5 depicts a plain view scanning electrode microscope (SEM) image showing graphene oxide stacks 150 and single layer graphene oxide 152 on a Nafion layer. It can be seen from Figure 5 that the Nafion-rich graphene oxide layer covers the catalyst surface with both single layers and stacked layers.

The following applications are related to the present application: U.S. Pat. Appl. Serial No. 17/842,029 filed on June 16, 2022, U.S. Pat. Appl. Serial No. 17/842,258 filed on June 16, 2022, and U.S. Pat. Appl. Serial No. 18/106,867 filed on February 7, 2023, all of which are incorporated by reference in their entirety.

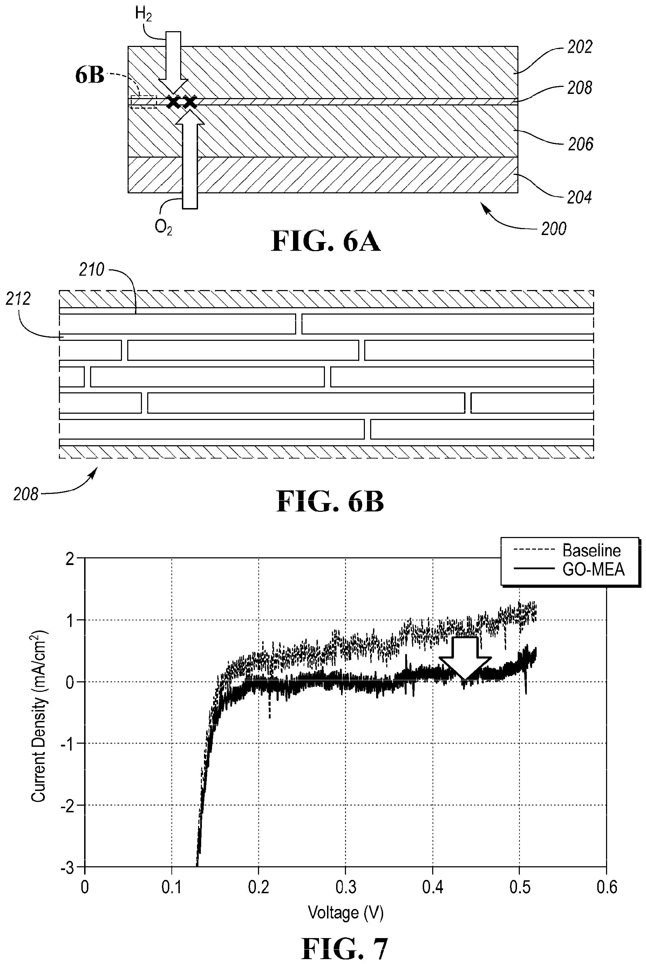

In another example, two electrolyzer MEAs were fabrications. The first and second MEAs included a Pt/C anode, Pt/C cathode, and a Nafion XL membrane. While the first MEA does not include any blocking layers, the second MEA includes a graphene oxide (GO) flake blocking layer inserted between the cathode and the anode as shown in Figures 6A and 6B.

As shown in Figure 6A, MEA 200 includes cathode catalyst layer 202, anode catalyst layer 204, and polymer electrolyte membrane 206 extending therebetween. GO flake blocking layer 208 is disposed between cathode catalyst layer 202 and polymer electrolyte membrane 206. The crosses represent mitigation of H₂ crossover at cathode catalyst layer 202 and mitigation of O₂ crossover and/or metal ion diffusion (e.g., Fe²⁺) from anode catalyst layer 204 through polymer electrolyte membrane 208 into cathode catalyst layer 202. As shown in Figure 6B, GO flake blocking layer 208 includes layers of GO flakes 210 with ionomer binder 212 therebetween.

The GO flake layer was prepared from a mixture of D2020 Nafion ionomer dispersion and single layer flakes of GO in water. The Nafion was incorporated in the GO flake layer for adherence to the cathode catalyst layer and the PEM membrane and to improve proton conductivity of the GO flake layer. The GO flake layer mixture was deposited via blade coating over the cathode catalyst layer prior to hot pressing to the PEM membrane.

Linear sweep voltammetry (LSV) was used to measure hydrogen crossover in an electrochemical cell including the first and second MEAs by supplying hydrogen to the anode and nitrogen to the cathode while sweeping between 0.1 and 0.55 V at a rate of 0.5 mv/s. The currents between 0.4 and 0.5 V were used for computing a flux of hydrogen from the anode to the cathode.

As shown in Figure 7, hydrogen crossover was significantly inhibited with the addition of the GO flake layer. Between 0.4 and 0.5 V, the crossover was reduced by a factor of 6, while the iR losses (measured via polymer electrolyte ion exchange (PEIS)) associated with the layer increased by a factor of 2. For a membrane of comparable crossover (e.g., 6x thicker), the iR penalty scales directly with thickness and is a factor of 6 higher. Thus, according to this example, the addition of the GO flake blocking layer to a thin membrane system enables a 3-fold reduction in iR losses at the same nominal crossover as a 6x thicker membrane without the GO flake blocking layer. In one or more embodiments, the reduction factor may be 1, 2, 3, or 4. The addition of the GO flake blocking layer to the MEA may result in a significantly reduced hydrogen crossover, thereby indicating a way to reduce membrane thickness while maintaining high performance and operation of PEM electrolysis MEAs.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. A polymer electrolyte water electrolyzer comprising:
a cathode catalyst layer;
an anode catalyst layer;
a polymer electrolyte membrane extending between and separating the anode catalyst layer and the cathode catalyst layer; and
a blocking layer disposed between the cathode catalyst layer and configured to resist unwanted diffusion of ions or molecules through the polymer electrolyte water electrolyzer.

2. The polymer electrolyte water electrolyzer of claim 1, wherein the blocking layer includes graphene oxide (GO) flakes.

3. The polymer electrolyte water electrolyzer of claim 1, wherein the ions or molecules include H₂ gas, O₂ gas, OH* radicals, OOH* radicals, other radicals, H₂O molecules, polyatomic molecules, metal complexes and/or metal ions.

4. The polymer electrolyte water electrolyzer of claim 1, wherein the blocking layer contains one or more layers of one or more materials.

5. The polymer electrolyte water electrolyzer of claim 4, wherein the one or more materials include graphene oxide (GO) flakes.

6. The polymer electrolyte water electrolyzer of claim 5, wherein the one or more materials include an ionomer binder.

7. The polymer electrolyte water electrolyzer of claim 4, wherein a number of the one or more layers is a range of 1 to 10 layers.

8. The polymer electrolyte water electrolyzer of claim 1, wherein a thickness of the first blocking layer is 20 nm to 5 µm.

9. The polymer electrolyte water electrolyzer of claim 1, wherein the blocking layer covers an entirety of an interface between the cathode catalyst layer and the polymer electrolyte membrane.

10. The polymer electrolyte water electrolyzer of claim 1, wherein the blocking layer includes a blocking material, a first ionomer material, and optionally a radical scavenger.

11. The polymer electrolyte water electrolyzer of claim 10, wherein the radical scavenger includes ceria nanoparticles.

12. The polymer electrolyte water electrolyzer of claim 1, wherein the blocking layer includes nanopores having an average size of 0.5 to 30 nm in diameter and configured to permit ion transport.

13. The polymer electrolyte water electrolyzer of claim 1, wherein the blocking layer includes a mixture of an ionomer and a blocking material.

14. A polymer electrolyte water electrolyzer comprising:
a cathode catalyst layer including a cathode catalyst support and cathode catalyst particles supported on the cathode catalyst support;
an anode catalyst layer including an anode catalyst support and anode catalyst particles supported on the anode catalyst support;
a polymer electrolyte membrane extending between and separating the anode catalyst layer and the cathode catalyst layer; and
a blocking layer disposed between the cathode catalyst layer and configured to resist unwanted diffusion of ions or molecules through the polymer electrolyte water electrolyzer, the blocking layer including graphene oxide (GO) flakes and an ionomer binder.

15. The polymer electrolyte water electrolyzer of claim 14, wherein the blocking material fully encapsulates an outer surface of the cathode catalyst layer.

16. The polymer electrolyte water electrolyzer of claim 14, wherein the blocking material individually encapsulates at least a portion of the cathode catalyst particles.

17. A method of forming a blocking material layer in a polymer electrolyte water electrolyzer, the method comprising:
applying a blocking material mixture onto a cathode catalyst layer, the blocking material mixture including graphene oxide (GO) flakes and an ionomer binder; and
applying a polymer electrolyte membrane onto the blocking material mixture to form a blocking material layer,
the blocking material layer configured to resist unwanted diffusion of ions or molecules through the polymer electrolyte water electrolyzer.

18. The method of claim 17, wherein the first applying step is performed via blade coating.

19. The method of claim 17, wherein the second applying step is performed via hot pressing.

20. The method of claim 19, wherein the graphene oxide (GO) flakes are single layer graphene oxide (GO) flakes.
